# EUROPEAN PATENT SPECIFICATION

(11) **EP 2 491 796 B1**
(45) Date of publication and mention of the grant of the patent: **26.08.2015**
(21) Application number: 11155425.9
(22) Date of filing: 22.02.2011
(51) Int. Cl.: A23L 1/00, A23L 1/221, A23P 1/04, C11B 5/00

(54) **Novel pandan extract articles in powder form and process for the production thereof**
Neue Pandanextraktprodukte in Pulverform und deren Herstellungsverfahren
Nouveaux articles d'extrait de pandan sous forme de poudre et leur procédé de production

(43) Date of publication of application: 29.08.2012
(73) Proprietor: Symrise AG, 37603 Holzminden (DE)
(72) Inventor: Degenhardt, Andreas, 37603, Holzminden (DE); Krammer, Gerhard, 37603, Holzminden (DE); Koch, Jens, 37632, Eschershausen (DE); Tai, Mee Yin, 298972, Singapore (SG)
(74) Representative: Fabry, Bernd

(56) References cited:
- JP-A- 2007 145 753
- US-A- 5 280 127
- LOH SENG KEAN; MAN YAAKOB B CHE; TAN CHIN PING; OSMAN AZIZAH; HAMID NAZIMAH SHEIK A: "Process optimisation of encapsulated pandan (Pandanus amaryllifolius) powder using spray-drying method", JOURNAL OF THE SCIENCE OF FOOD AND AGRICULTURE, vol. 85, no. 12, 1 September 2005 (2005-09-01), pages 1999-2004, XP002635023,
- APINTANAPONG MUANMAI; NOOMHORM ATHAPOL: "The use of spray drying to microencapsulate 2-acetyl-1-pyrroline, a major flavour component of aromatic rice", INTERNATIONAL JOURNAL OF FOOD SCIENCE AND TECHNOLOGY, vol. 38, no. 2, 1 February 2003 (2003-02-01), pages 95-102, XP002635024,
- Suntaree Vara-Ubol et al.: "Effect of Maltodextrin and Inlet Air Temperatures on Quality of Spray Dried Pandan Extract", , 17 July 2003 (2003-07-17), pages 1-1, XP002635025, Retrieved from the Internet: URL:http://iufost.confex.com/iufost/2003/t echprogram/paper_1417.htm [retrieved on 2011-05-02]
- DATABASE WPI Week 200580 Thomson Scientific, London, GB; AN 2005-783124 XP002635026, -& JP 2005 323571 A (MARUZEN SEIYAKU KK) 24 November 2005 (2005-11-24)
- Gernot Katzer: "Pandanus (Pandanus amaryllifolius Roxb.)", , 30 April 2007 (2007-04-30), pages 1-6, XP002635027, Retrieved from the Internet: URL:http://replay.web.archive.org/20070430 160515/http:/www.uni-graz.at/~katzer/engl/ Pand_ama.html [retrieved on 2011-05-02]
- "Flavouring from Plants, Chapter 8" In: Harold McGee: "On Food and Cooking: The Science and Lore of the Kitchen", 1 January 2004 (2004-01-01), Scribner, New York, XP002635028, pages 411-411, * the whole document *
- ADAMS AN ET AL: "Chemistry of 2-acetyl-1-pyrroline, 6-acetyl-1,2,3,4-tetrahydropyridi ne, 2-acetyl-2-thiazoline, and 5-acetyl-2,3-dihydro-4H-thiazine: extraordinary Maillard flavor compounds", CHEMICAL REVIEWS, ACS,WASHINGTON, DC, US, vol. 106, no. 6, 14 June 2006 (2006-06-14) , pages 2299-2319, XP002564375, ISSN: 0009-2665, DOI: DOI:10.1021/CR040097Y [retrieved on 2006-04-27]
- FAVINO T F ET AL: "Penicillin Acylase-Mediated Synthesis of 2-Acetyl-1-pyrroline and of 2-Propionyl-1-pyrroline, Key Roast-Smelling Odorants in Food. Inclusion Complexes with ss-Cyclodextrin and Their NMR and MS Characterization", JOURNAL OF ORGANIC CHEMISTRY, AMERICAN CHEMICAL SOCIETY, EASTON.; US, vol. 61, 1 January 1996 (1996-01-01), pages 8975-8979, XP002186606, ISSN: 0022-3263, DOI: DOI:10.1021/JO961474C
- LAOHAKUNJIT ET AL: "Aroma enrichment and the change during storage of non-aromatic milled rice coated with extracted natural flavor", FOOD CHEMISTRY, ELSEVIER LTD, NL, vol. 101, no. 1, 12 August 2006 (2006-08-12), pages 339-344, XP005754186, ISSN: 0308-8146, DOI: 10.1016/J.FOODCHEM.2005.12.055
- ROUTRAY WINNY ET AL: "Chemical Constituents and Post-Harvest Prospects of Pandanus amaryllifolius Leaves: A Review", FOOD REVIEWS INTERNATIONAL, TAYLOR & FRANCIS, PHILADELPHIA, USA, vol. 26, no. 3, 1 January 2010 (2010-01-01), pages 230-245, XP009147762, ISSN: 8755-9129, DOI: 10.1080/87559129.2010.484114
- DATABASE GNPD [Online] Mintel; 1 September 2009 (2009-09-01), Anonymous: "Soy Bean Milk", XP000002658340, retrieved from www.gnpd.com Database accession no. 1173371
- DATABASE GNPD [Online] Mintel; 1 April 2009 (2009-04-01), Anonymous: "Malva Nut Juice", XP000002658341, retrieved from www.gnpd.com Database accession no. 1081858
- Anonymous: "Pandan Chiffon Cake", , 7 October 2010 (2010-10-07), pages 1-8, XP000002658342, Retrieved from the Internet: URL:http://web.archive.org/web/20101007215 310/http://www.honeyandsoy.com/pandan-chif fon-cake/ [retrieved on 2011-09-06]
- Yan ET AL: "Comparison of total phenolic contents and antioxidant activities of turmeric leaf, pandan leaf and torch ginger flower", International Food Research Journal, 1 February 2010 (2010-02-01), pages 417-423, XP55006420, Retrieved from the Internet: URL:http://ifrj.upm.edu.my/17 (02) 2010/IFRJ-2010-417-423_Yan_Malaysia[1].pdf [retrieved on 2011-09-07]
- Watinee Intharapongnuwat ET AL: "Process improvement for Thai-style fried rice crackers", Asian Journal of Food and Agro-Industry, 1 January 2008 (2008-01-01), pages 155-166, XP55006435, Retrieved from the Internet: URL:http://www.ajofai.info/Abstract/Proces s improvement for thai-style fried rice crackers.pdf [retrieved on 2011-09-07]

## Description

The present invention relates to a novel pandan extract article in powder form, wherein the article comprises advantageously high amounts of precursors of 2-acetyl-1-pyrroline. Said article is obtainable by a process described hereinafter.

The present invention thus also relates to a corresponding process of preparing a pandan extract article in powder form, preferably a pandan extract article according to the present invention, the process comprising the following steps:
- providing pandan leaves or parts thereof,
- contacting the pandan leaves or the parts thereof with water having a temperature in the range of from 20 °C to 25 °C, so that an aqueous extract of ingredients of pandan leaves is obtained,
- removing water from the aqueous extract, in the presence or absence of a carrier material or other additives, wherein the water is removed by spray drying the aqueous extract using an inlet temperature in the range of from 150 to 160 °C, and an outlet temperature below 80 °C, preferably an outlet temperature in the range of from 70 to 75 °C, so that the pandan extract article in powder form is obtained
   characterized in that the pandan extract article comprises
   less than 10 ppm of prolin, based on the total weight of the article,
   20 to 50 ppm of glutamic acid, based on the total weight of the article,
   0,5 to 3 ppm of 2-Acetyl-1-Pyrroline, based on the total weight of the article, and
   0,5 to 3 ppm of 3-Methyl-2(5H)-Furanon, based on the total weight of the article.

The present invention further provides a novel method of imparting or enhancing the organoleptic properties, of a food or beverage selected from the group consisting of mouthfullness and roasted notes,
or
masking an off-note of an edible fat or oil,
the method comprising the following steps:
- providing a pandan extract article according to any of claims 1 to 4 or preparing a pandan extract article according to a process of any of claims 5 to 7,
- combining the pandan extract article as provided or as prepared with the said food or beverage
or
with the edible fat or oil which have an off-note or being prone to develop an off-note, so that said off-note is masked.

Furthermore, the present invention relates to a method of masking an off-note of an edible fat or oil, wherein a pandan extract article according to the present invention or a pandan extract article prepared by a process according to the present invention is used.

The present invention also relates to a method of making edible food products and the use of a pandan extract article according to the present invention or prepared according to a process according to the present invention for
- imparting or enhancing organoleptic properties, the organoleptic properties being selected from the group consisting of mouthfullness and roasted notes, and/or
- masking off-notes of edible fats and oils.

Natural roast aromas are widely used in roasted food products such as coffee, malt, cocoa and the like. Natural roast aromas usually contain flavors depending on Maillard chemistry based on sugars and (free) amino acids as educts. The aroma profiles of such mixtures vary depending on said educts, further reaction partners or other compounds and the respective reaction conditions.

Especially aroma extracts of roasted coffee, which may be used as natural roast aroma in roasted food products, are rather unstable and difficult to obtain. It is therefore highly desirable to have an alternative source for roast aromas, preferably for natural roast aromas (i. e. from natural sources), which provides a more stable and more pleasant roasted character.

The use of (natural) roasted aromas or aroma extracts therefore, respectively, is widespread ranging from release of roasted notes for heated food products, such as soups, up to the use in cold applications, such as ice-cream, puddings, and desserts.

*Pandanus amaryllifolius* is a tropical plant which is commonly known as "pandan". Pandan is widely used in south-east Asian cooking as a flavoring. In particular, the leaves of *pandanus amaryllifolius* are used either fresh or wilted and provide a nutty, botanical fragrance. As commonly believed, the characteristic aroma of pandan is mainly caused by the aroma compound 2-acetyl-1-pyrroline, which, inter alia, gives jasmine rice and basmati rice their typical smell.

2-Acetyl-1-pyrroline can be formed by Maillard reactions during heating of food such as in baked bread. In particular, as already known (see J. agric. Food Chem. 1998, 46, 616-619), 2-acetyl-1-pyrroline may be formed from ornithin, prolin or glutamic acid in Maillard reaction. However, it is presumed that 2-acetyl-1-pyrroline is not a direct reaction product of ornithin, prolin or glutamic acid, but merely of an intermediate product, i. e. there are unknown (direct) precursors of 2-acetyl-1-pyrroline.

Various alkaloids have been described for pandan (see e. g. J. Nat. Prod. 2004, 67, 54-57; ACGC Chemical research Communications, 1996, 5, 24-27, Phytochemistry, 1993, 34, 1159-1163; Chem. Pharm. Bull. 2002, 50, 1303-1304; J. Nat. Prod. 2001, 64, 1579-1580; J. Nat. prod. 2001, 64, 1224-1225; J. Am. Chem. Soc. 2000, 122, 8635-8639; Tetrahedron Letters 2001, 42, 2995-2996). However, from these papers it is unclear how roasted notes are formed. However, biosynthetic routes for the major roasted smelling compound from pandan, i.e. 2-acetyl-1-pyrroline (Chem. Ind. 1983, 478), have been described at least for aromatic rice *(Oryza sativa* L.). In this regard, pyrroline-5-carboxylic acid and methylglyoxal are named as potential precursors of 2-acetyl-1-pyrroline (J. Agric. Food Chem., 2008, 56 (16), pp 7399-7404).

The chemical synthesis of 2-acetyl-1-pyrroline is challenging. Though synthetic chemical routes to 2-acetyl-1-pyrroline have been described in the literature (J. Agric. Food Chem. 1998, 46, 616-619), 2-acetyl-1-pyrroline produced by such routes will suffer from its inherent instability and will therefore be of only limited use for food flavoring applications.

Technological attempts to stabilize the 2-acetyl-1-pyrroline are described in WO 2004/056202 A1, according to which a dispersible dry powder form is obtained. Enhancement of the content of 2-acetyl-1-pyrroline may be achieved by precursor feeding of L-proline which was demonstrated in in vitro cultures of *Pandanus amaryllifolius* (see J. Sci. Food Agric. 2005, 85, 2527-2534).

The production of 2-acetyl-1-pyrroline via microbial cultures might also be feasible (Flavour and Fragrance Journal 2005, 20, 710-714).

Studies on the precursor content of 2-acetyl-1-pyrroline in pandan have been carried out by M. Jezussek (PhD thesis, Technical University of Munich, 2002). However, particular precursor compounds of 2-acetyl-1-pyrroline have not been identified in the study.

The Journal of the Science of Food and Agriculture 85, 1999-2004 (2005), describes a (optimized) process for the production of encapsulated pandan powder using spray-drying method.

The preferred object of the present invention was to provide a pandan extract article in powder form having improved flavor properties, in particular when combined with food products, in particular with regard to more intense and long lasting roasted notes and/or mouthfullness, especially in baked products, rice and fat based food products. More particularly, there is a strong need for a pandan extract comprising high amounts of (direct) precursors of (aroma-active) 2-acetyl-1-pyrroline.

A further object of the present invention is to provide a process of preparing such a pandan extract article.

Further objections underlying the present invention follow from the description below and the present patent claims.

According to a first aspect of the present invention, the underlying object is achieved by a pandan extract article in powder form, wherein the article comprises precursors of 2-acetyl-1-pyrroline and is obtainable by a process comprising the following steps:
- providing pandan leaves or parts thereof,
- contacting the pandan leaves or the parts thereof with water having a temperature in the range of from 20 °C to 25 °C, so that an aqueous extract of ingredients of pandan leaves is obtained,
- removing water from the aqueous extract, in the presence or absence of a carrier material or other additives, wherein the water is removed by spray drying the aqueous extract using an inlet temperature in the range of from 150 to 160 °C, and an outlet temperature below 80 °C, preferably an outlet temperature in the range of from 70 to 75 °C,so that the pandan extract article in powder form is obtained
wherein
the article comprises
less than 10 ppm of prolin, based on the total weight of the article,
20 to 50 ppm of glutamic acid, based on the total weight of the article,
0,5 to 3 ppm of 2-Acetyl-1-Pyrroline, based on the total weight of the article, and
0,5 to 3 ppm of 3-Methyl-2(5H)-Furanon, based on the total weight of the article.

Pandan extract articles according to the present invention contain an advantageously high amount of precursors of 2-acetyl-1-pyrroline.

Without wishing to be bound by theory, it is believed that the pandan extract article according to the present invention comprises a relatively high amount of (unknown) precursors, since (free) amino acids, in particular (free) proline, glutamic acid and/or ornithin, originally contained in the pandan leaves or corresponding parts thereof are converted (during the process as described above) to precursors of 2-acetyl-1-pyrroline. However, as soon as the pandan extract article according to the invention is heated (e.g. in combination with a food product), in particular above 80 degrees centigrade, a strong and long lasting release of 2-acetyl-1-pyrroline is released, which is believed to result of the relatively high amount of precursors of 2-acetyl-1-pyrroline in the pandan extract article, which are - when activated by heat - converted into the (aroma-active) 2-acetyl-1-pyrroline.

A preferred pandan extract article according to the present invention (as described above), comprises less than 10 ppm, preferably 0,1 to 8 ppm, of (free) prolin, based on the total weight of the article.

A (further) preferred pandan extract article according to the present invention comprises 20 to 50 ppm of (free) glutamic acid, based on the total weight of the article.

A (further) preferred pandan extract article according to the present invention comprises 100 to 500 ppm of total free amino acids, based on the total weight of the article.

A (further) preferred Pandan extract article according to the present invention comprises 0,5 to 3 ppm of 3-Methyl-2(5H)-Furanon, based on the total weight of the article.

A (further) preferred Pandan extract article according to the present invention comprises 0,5 to 3 ppm of 2-Acetyl-1-Pyrroline, based on the total weight of the article.

Pandan extract articles according to the present invention are not known from the prior art. In particular, the Journal of the Science of Food and Agricultural 85, 1999-2004 (2005), does not disclose, neither explicitly nor implicitly, pandan extract articles according to the present invention, in particular pandan extract articles comprising the above amounts of (free) amino acids. It is believed that the temperature at which the pandan leaves or the parts thereof, respectively, are contacted with water (see above) as well as the used inlet and outlet temperatures when spray drying the aqueous extract (see above) are of particular importance.

Particularly preferred is a pandan extract article according to the present invention (as described above), wherein the water is removed from the aqueous extract in the presence of a carrier material, wherein the carrier material comprises an inclusion compound host material for including 2-acetyl-1-pyrroline. Preferably, the inclusion compound host material is also a host material for including above described (unknown) precursors of 2-acetyl-1-pyrroline therein.

It is particularly preferred that the carrier material comprises an inclusion compound host material wherein the inclusion compound host material is cyclodextrin, in particular alpha-cyclodextrin, beta-cyclodextrin or gamma-cyclodextrin, preferably beta-cyclodextrin.

The inclusion compound host material and the substance(s) to be included therein (here: at least 2-acetyl-1-pyrroline) form inclusion compounds, i. e. complexes in which one chemical compound (the inclusion compound "host" material) forms a cavity in which molecules of a second (or more) "guest" compound(s) (here: at least 2-acetyl-1-pyrroline) are located.

The presence of an inclusion compound host material as described above results in the advantage that such preferred pandan extract articles (as described above) provide a particularly prolonged release of 2-acetyl-1-pyrroline when heated, presumably due to the heat stability provided by the inclusion of 2-acetyl-1-pyrroline, which is believed to be (mainly) produced by heat-activated conversion from precursors of 2-acetyl-1-pyrroline (see above) to 2-acetyl-1-pyrroline.

According to an alternative or a further preferred solution according to the present invention, a pandan extract article (as described above), wherein the water is removed from the aqueous extract in the presence of a carrier material, wherein the carrier material (also) comprises maltodextrin, is particularly preferred.

A further aspect of the present invention relates to a process of preparing a pandan extract article in powder form, preferably a pandan extract article according to the present invention (as described above), the process comprising the following steps:
- providing pandan leaves or parts thereof,
- contacting the pandan leaves or the parts thereof with water having a temperature in the range of from 20 °C to 25 °C, so that an aqueous extract of ingredients of pandan leaves is obtained,
- removing water from the aqueous extract, in the presence or absence of a carrier material or other additives, wherein the water is removed by spray drying the aqueous extract using an inlet temperature in the range of from 150 to 160 °C, and an outlet temperature below 80 degrees centigrade, preferably an outlet temperature in the range of from 70 to 75 °C,so that the pandan extract article in powder form is obtained,
characterized in that the pandan extract article comprises
less than 10 ppm of prolin, based on the total weight of the article,
20 to 50 ppm of glutamic acid, based on the total weight of the article,
0,5 to 3 ppm of 2-Acetyl-1-Pyrroline, based on the total weight of the article, and
0,5 to 3 ppm of 3-Methyl-2(5H)-Furanon, based on the total weight of the article.

Preferred is a process as described above, wherein the water is removed from the aqueous extract in the presence of a carrier material, wherein the carrier material comprises an inclusion compound host material for including 2-acetyl-1-pyrroline and preferably precursors of 2-acetyl-1-pyrroline (see above) therein.

Further preferred is a process as described above, wherein the inclusion compound host material is cyclodextrin, in particular alpha-cyclodextrin, beta-cyclodextrin or gamma-cyclodextrin, preferably beta-cyclodextrin.

Particularly preferred is a process according to the present invention (as described above), wherein the water is removed from the aqueous extract in the presence of a carrier material, wherein the carrier material comprises maltodextrin.

A further aspect of the present invention relates to a method of imparting or enhancing the organoleptic properties of a food or beverage selected from the group consisting of mouthfullness and roasted notes,
or
masking an off-note of an edible fat or oil,
the method comprising the following steps:
- providing a pandan extract article according to the present invention (as described above) or preparing a pandan extract article according to a process according to the present invention (as described above), and
- combining the pandan extract article as provided or as prepared with
the said food or beverage
or
with the edible fat or oil which have an off-note or being prone to develop an off-note, so that said off-note is masked.

Preferred is a method as described above, wherein the product is a consumable, preferably a food or beverage product.

Particularly preferred is a method according to the invention (as described above), the method comprising the additional step of
- heating, baking or cooking, the food or beverage after combination with the pandan extract article as provided or as prepared in order to increase the release of 2-acetyl-1-pyrroline from the pandan extract.

By doing so, it is believed (without wishing to be bound by theory) that precursors of 2-acetyl-1-pyrroline, which are advantageously contained in high amounts in a pandan extract article according to the present invention, are converted to (aroma-active) 2-acetyl-1-pyrroline. That results in an advantageously prolonged and strong release of 2-acetyl-1-pyrroline.

If the pandan extract article is obtained by a process or a method, respectively, wherein the water is removed from the aqueous extract in the presence of a carrier material, wherein the carrier material comprises an inclusion compound host material (as described above), preferably cyclodextrin, strength and duration of the release of 2-acetyl-1-pyrroline is even more improved.

Also preferred is a method as described above, wherein the product is
- rice or a rice-based product, or
- a food product comprising one or more edible fats or oils, preferably a dairy or soy bean product.

A further aspect of the present invention relates to a method of masking an off-note of an edible fat or oil, the method comprising the following steps:
- providing a pandan extract article according to the present invention (as described above) or preparing a pandan extract article according to a process according to the present invention (as described above),
- combining the pandan extract article as provided or as prepared, respectively, with an edible fat or oil having an off-note or being prone to develop an off-note, so that said off-note is masked.

Particularly preferred is a method as described above, wherein the off-note is selected from the group consisting of cardboard notes, soy notes, beany notes, bitter notes, aldehydic notes, malty notes, astringent notes, rancid notes, musty notes and mouldy notes.

Further preferred is a method as described above, wherein the method comprises the additional step of
- heating the product after combination with the pandan extract article as provided or as prepared so as to increase the release of 2-Acetyl-1-pyrroline from the pandan extract (cf. above).

A further aspect of the present invention relates to a method of making an edible food product, comprising the following steps:
- providing a pandan extract article according to the present invention (as described above) or preparing a pandan extract article according to a method according to the present invention (as described above),
- combining the pandan extract article as provided or as prepared, respectively, with a food product material, and
- optionally heating, preferably baking or cooking, the food product material obtained by combination with the pandan extract article, in order to obtain the edible food product.

Preferred is a method as described above, wherein the edible food product is selected from the group consisting of baked products, cooked products, rice, rice-based products, and food products comprising one or more edible fats or oils. Further preferred food products are Coffee and coffee mix products, cereals, cookies, malt products, bread, snacks, fried noodles and soups.

The present invention thus also relates to an edible food product (as described above), comprising a pandan extract article according to the present invention (as described above) or a pandan extract article prepared according to a method according to the present invention (as described above).

A further aspect of the present invention relates to the use of a pandan extract article according to the present invention or prepared according to a method according to the present invention (as respectively described above) for
- imparting or enhancing organoleptic properties, the organoleptic properties being selected from the group consisting of mouthfullness and roasted notes, and/or
- masking off-notes of edible fats and oils.

Preferred embodiments and further aspects of the present invention emerge from the attached patent claims and the following example, the example is not being intended to limit the scope of the present invention.

### EXAMPLE:

Production of a pandan extract article (according to the present invention):
At first, pandan leaves are cut about 5 to 10 cm off the top of stem. Then, the leaves are weighed (in required batch weight).
Afterwards the leaves are washed three times with water (tap water), keeping the several batches separate.

The leaves are grinded in the respective batches with water (ratio of dry leaves: water is approximately 1: 4.5) at high speed on Stephan cutter for 4 minutes (afterwards: stand for 2 minutes). Then, the resulting mixtures are filtered through 400 micron bag filter to remove bulk of cut leaves and all filtrates are combined. The (combined) filtrate is acidified with citric acid (0.09 to 0.1 % solution of 50 % citric acid) to less than pH 4.5. The acidified filtrate is filtered through Seitz K100 filter using Filter press or Supradisc set up.

Afterwards, the resulting filtered pandan extract is spray dried, using following spray dry emulsion recipe:
filtered pandan extract: 66.7 wt.-%
Maltodextrin DE 10-12: 33.3 wt.-%
(alternatively, for example 73 wt.-% of filtered pandan extract and 27 wt.-% of beta Cyclodextrin may be used) and following temperature settings:
   inlet temperature: 160 °C
   outlet temperature: 75 °C,so that a pandan extract article in powder form is obtained.

## Claims

1. Pandan extract article in powder form, wherein the article comprises precursors of 2-acetyl-1-pyrroline and is obtainable by a process comprising the following steps:
- providing pandan leaves or parts thereof,
- contacting the pandan leaves or the parts thereof with water having a temperature in the range of from 20 to 25 °C, so that an aqueous extract of ingredients of pandan leaves is obtained,
- removing water from the aqueous extract, wherein the water is removed by spray drying the aqueous extract using an inlet temperature in the range of from 150 to 160 °C, and an outlet temperature in the range of from 70 to 75 °C, so that the pandan extract article in powder form is obtained,
wherein
the article comprises
less than 10 ppm of prolin, based on the total weight of the article,
20 to 50 ppm of glutamic acid, based on the total weight of the article,
0,5 to 3 ppm of 2-Acetyl-1-Pyrroline, based on the total weight of the article, and
0,5 to 3 ppm of 3-Methyl-2(5H)-Furanon, based on the total weight of the article.

2. Pandan extract article according to claim 1, wherein the article comprises 100 to 500 ppm of total free amino acids, based on the total weight of the article.

3. Pandan extract article according to any preceding claim, wherein the water is removed from the aqueous extract in the presence of a carrier material, wherein the carrier material comprises an inclusion compound host material for including 2-acetyl-1-pyrroline and preferably precursors of 2-acetyl-1-pyrroline therein,
wherein the inclusion compound host material is cyclodextrin, in particular alpha-cyclodextrin, beta-cyclodextrin or gamma-cyclodextrin, preferably beta-cyclodextrin.

4. Pandan extract article according to any preceding claim, preferably according to claim 2, wherein the water is removed from the aqueous extract in the presence of a carrier material, wherein the carrier material comprises maltodextrin.

5. Process of preparing a pandan extract article in powder form, comprising the following steps:
- providing pandan leaves or parts thereof,
- contacting the pandan leaves or the parts thereof with water having a temperature in the range of from 20°C to 25°C, so that an aqueous extract of ingredients of pandan leaves is obtained,
- removing water from the aqueous extract, wherein the water is removed by spray drying the aqueous extract using an inlet temperature in the range of from 150 to 160 °C, and an outlet temperature in the range of from 70 to 75 °C, so that the pandan extract article in powder form is obtained
**characterized in that** the pandan extract article comprises
less than 10 ppm of prolin, based on the total weight of the article,
20 to 50 ppm of glutamic acid, based on the total weight of the article,
0,5 to 3 ppm of 2-Acetyl-1-Pyrroline, based on the total weight of the article, and
0,5 to 3 ppm of 3-Methyl-2(5H)-Furanon, based on the total weight of the article.

6. Process according to claim 5, wherein the water is removed from the aqueous extract in the presence of a carrier material, wherein the carrier material comprises an inclusion compound host material for including 2-acetyl-1-pyrroline and preferably precursors of 2-acetyl-1-pyrroline therein,
wherein the inclusion compound host material is cyclodextrin, in particular alpha-cyclodextrin, beta-cyclodextrin or gamma-cyclodextrin, preferably beta-cyclodextrin.

7. Process according to any of claims 5 to 6, preferably according to claim 5, wherein the water is removed from the aqueous extract in the presence of a carrier material, wherein the carrier material comprises maltodextrin.

8. Method of imparting or enhancing the organoleptic properties of a food or beverage selected from the group consisting of mouthfullness and roasted notes,
or
masking an off-note of an edible fat or oil,
the method comprising the following steps:
- providing a pandan extract article according to any of claims 1 to 4 or preparing a pandan extract article according to a process of any of claims 5 to 7,
- combining the pandan extract article as provided or as prepared with the said food or beverage
or
with the edible fat or oil which have an off-note or being prone to develop an off-note, so that said off-note is masked.

9. Method according to claim 8, the method comprising the additional step of
- heating, baking or cooking, the food or beverage after combination with the pandan extract article as provided or as prepared in order to increase the release of 2-acetyl-1-pyrroline from the pandan extract.

10. Method according to any of claims 8 to 9, wherein the product is
- rice or a rice-based product,
or
- a food product comprising one or more edible fats or oils, preferably a dairy or soy bean product.

11. Use of a pandan extract article according to any of claims 1 to 4 or prepared according to a method of any of claims 5 to 7 for
- imparting or enhancing organoleptic properties, the organoleptic properties being selected from the group consisting of mouthfullness and roasted notes,
and/or
- masking off-notes of edible fats and oils.

## Patentansprüche

1. Pandanextraktartikel in Pulverform, wobei der Artikel Präkursoren von 2-Acetyl-1-pyrrolin umfasst, und dadurch erhältlich durch ein Verfahren umfassend die folgenden Schritte:
- Bereitstellung von Pandanblättern oder Teile davon,
- In Kontakt bringen der Pandanblättern oder Teile davon mit Wasser, wobei das Wasser eine Temperatur aufweist, die im Bereich von 20°C bis 25 °C liegt, so dass ein wässriger Extrakt von Bestandteilen aus Pandanblättern erhalten wird,
- Entfernung vom Wasser aus dem wässrigen Extrakt, wobei das Wasser mittels Sprühtrocknung des wässrigen Extrakts unter Verwendung einer Eintrittstemperatur im Bereich von 150 °C bis 160 °C und einer Austrittstemperatur im Bereich von 70 °C bis 75 °C entfernt wird, so dass der Pandanextraktartikel in Pulverform erhalten wird,
wobei
der Pandanextraktartikel umfasst
weniger als 10 ppm Prolin, bezogen auf das Gesamtgewicht des Artikels,
20 bis 50 ppm Glutaminsäure, bezogen auf das Gesamtgewicht des Artikels,
0,5 bis 3 ppm 2-Acetyl-1-Pyrrolin, bezogen auf das Gesamtgewicht des Artikels, und
0,5 bis 3 ppm 3-Methyl-2(5H)-Furanon, bezogen auf das Gesamtgewicht des Artikels.

2. Pandanextraktartikel nach Anspruch 1, wobei der Artikel 100 bis 500 ppm an gesamten freien Aminosäuren umfasst, bezogen auf das Gesamtgewicht des Artikels.

3. Pandanextraktartikel nach einem der vorhergehenden Ansprüche, wobei das Wasser aus dem wässrigen Extrakt in Gegenwart eines Trägermaterials entfernt wird, wobei das Trägermaterial ein Einschlussverbindungswirtsmaterial zum Einschluss von 2-Acetyl-1-pyrrolin umfasst, vorzugsweise Präkursoren von 2-Acetyl-1-pyrrolin darin, wobei das Einschlussverbindungswirtsmaterial Cyclodextrin ist, insbesondere alpha-Cyclodextrin, beta-Cyclodextrin oder gamma-Cyclodextrin, vorzugsweise beta-Cyclodextrin.

4. Pandanextraktartikel nach einem der vorhergehenden Ansprüche, vorzugsweise nach Anspruch 2, wobei das Wasser aus dem wässrigen Extrakt in Gegenwart eines Trägermaterials entfernt wird, wobei das Trägermaterial Maltodextrin umfasst.

5. Verfahren zur Herstellung eines Pandanextraktartikels in Pulverform, umfassend die folgenden Schritte:
- Bereitstellung von Pandanblättern oder Teile davon,
- In Kontakt bringen der Pandanblättern oder Teile davon mit Wasser, wobei das Wasser eine Temperatur aufweist, die im Bereich von 20°C bis 25 °C liegt, so dass ein wässriger Extrakt von Bestandteilen aus Pandanblättern erhalten wird,
- Entfernung vom Wasser aus dem wässrigen Extrakt, wobei das Wasser mittels Sprühtrocknung des wässrigen Extrakts unter Verwendung einer Eintrittstemperatur im Bereich von 150 °C bis 160 °C und einer Austrittstemperatur im Bereich von 70 °C bis 75 °C entfernt wird, so dass der Pandanextraktartikel in Pulverform erhalten wird,
**dadurch gekennzeichnet, dass** der Pandanextraktartikel umfasst weniger als 10 ppm Prolin, bezogen auf das Gesamtgewicht des Artikels,
20 bis 50 ppm Glutaminsäure, bezogen auf das Gesamtgewicht des Artikels,
0,5 bis 3 ppm 2-Acetyl-1-Pyrrolin, bezogen auf das Gesamtgewicht des Artikels, und
0,5 bis 3 ppm 3-Methyl-2(5H)-Furanon, bezogen auf das Gesamtgewicht des Artikels.

6. Verfahren nach Anspruch 5, wobei das Wasser aus dem wässrigen Extrakt in Gegenwart eines Trägermaterials entfernt wird, wobei das Trägermaterial ein Einschlussverbindungswirtsmaterial zum Einschluss von 2-Acetyl-1-pyrrolin und vorzugsweise Präkursoren von 2-Acetyl-1-pyrrolin darin umfasst,
wobei das Einschlussverbindungswirtsmaterial Cyclodextrin ist, insbesondere alpha-Cyclodextrin, beta-Cyclodextrin oder gamma-Cyclodextrin, vorzugsweise beta-Cyclodextrin.

7. Verfahren nach einem der Ansprüche 5 bis 6, vorzugsweise nach Anspruch 5, wobei das Wasser aus dem wässrigen Extrakt in Gegenwart eines Trägermaterials entfernt wird, wobei das Trägermaterial Maltodextrin umfasst.

8. Verfahren zur Verleihung oder Erhöhung der organoleptischen Eigenschaften eines Nahrungsmittels oder Getränkes ausgewählt aus der Gruppe bestehend aus Mundvoll und gerösteten Noten,
oder
Maskierung eines Beigeschmackes eines Speisefettes oder Öles,
wobei das Verfahren die folgenden Schritte umfasst:
- Bereitstellung eines Pandanextraktartikels nach einem der Ansprüche 1 bis 4 oder Herstellung eines Pandanextraktartikels nach dem Verfahren nach einem der Ansprüche 5 bis 7,
- Kombination des Pandanextraktartikels wie bereitgestellt oder wie hergestellt mit dem Nahrungsmittel oder Getränk
oder
mit dem Speisefett oder Öl, welches ein Beigeschmack hat oder dazu neigt einen Beigeschmackes zu entwickeln, so dass der besagte Beigeschmack maskiert wird.

9. Verfahren nach Anspruch 8, wobei das Verfahren den zusätzlichen Schritt des Heizens, Backens oder Kochens des Nahrungsmittels oder des Getränks nach der Kombination mit dem Pandanextraktartikel wie bereitgestellt oder wie hergestellt umfasst, um die Freisetzung von 2-Acetyl-1-pyrrolin aus dem Pandanextrakt zu erhöhen.

10. Verfahren nach einem der Ansprüche 8 bis 9, wobei das Produkt
- Reis oder ein reisbasiertes Produkt
oder
- ein Nahrungsprodukt, das ein oder mehrere Speisefette oder Öle umfasst, vorzugsweise einem Milchprodukt oder einem Sojabohne Produkt
ist.

11. Verwendung eines Pandanextraktartikels nach einem der Ansprüche 1 bis 4 oder hergestellt nach dem Verfahren nach einem der Ansprüche 5 bis 7 zur
- Verleihung oder Erhöhung der organoleptischen Eigenschaften, wobei die organoleptischen Eigenschaften aus der Gruppe bestehend aus Mundvoll und gerösteten Noten ausgewählt sind,
und/oder
- Maskierung eines Beigeschmackes von Speisefetten oder Ölen.

## Revendications

1. Article d'extrait de pandan sous forme pulvérulente, **caractérisé en ce que** l'article comprend des précurseurs de 2-acétyl-1-pyrroline et peut être obtenu par un procédé comprenant les étapes suivantes :
- la fourniture de feuilles de pandan ou de parties de celles-ci,
- la mise en contact des feuilles de pandan ou des parties de celles-ci avec de l'eau ayant une température dans la plage allant de 20 à 25°C, de façon à obtenir un extrait aqueux d'ingrédients de feuilles de pandan,
- l'élimination de l'eau à partir de l'extrait aqueux, où l'eau est éliminée par séchage par pulvérisation de l'extrait aqueux en utilisant une température d'entrée dans la plage allant de 150 à 160°C, et une température de sortie dans la plage allant de 70 à 75°C, de façon à obtenir un article d'extrait de pandan sous forme pulvérulente,
**caractérisé en ce que** l'article comprend
moins de 10 ppm de proline, sur la base du poids total de l'article,
de 20 à 50 ppm d'acide glutamique, sur la base du poids total de l'article,
de 0,5 à 3 ppm de 2-acétyl-1-pyrroline, sur la base du poids total de l'article, et
de 0,5 à 3 ppm de 3-méthyl-2(5H)-furanone, sur la base du poids total de l'article.

2. Article d'extrait de pandan selon la revendication 1, **caractérisé en ce que** l'article comprend de 100 à 500 ppm d'acides aminés libres totaux, sur la base du poids total de l'article.

3. Article d'extrait de pandan selon l'une quelconque des revendications précédentes, **caractérisé en ce que** l'eau est éliminée de l'extrait aqueux en présence d'un matériau véhicule, où le matériau véhicule comprend un matériau hôte de composé d'inclusion pour y inclure de la 2-acétyl-1-pyrroline et préférablement des précurseurs de 2-acétyl-1-pyrroline,
où le matériau hôte de composé d'inclusion est une cyclodextrine, en particulier l'alpha-cyclodextrine, la bêta-cyclodextrine ou la gamma-cyclodextrine, de préférence la bêta-cyclodextrine.

4. Article d'extrait de pandan selon l'une quelconque des revendications précédentes, préférablement selon la revendication 2, **caractérisé en ce que** l'eau est éliminée de l'extrait aqueux en présence d'un matériau véhicule, où le matériau véhicule comprend des maltodextrines.

5. Procédé de préparation d'un article d'extrait de pandan sous forme pulvérulente, comprenant les étapes suivantes :
- la fourniture de feuilles de pandan ou de parties de celles-ci,
- la mise en contact des feuilles de pandan ou des parties de celles-ci avec de l'eau ayant une température dans la plage allant de 20°C à 25°C, de façon à obtenir un extrait aqueux d'ingrédients de feuilles de pandan,
- l'élimination de l'eau à partir de l'extrait aqueux, où l'eau est éliminée par séchage par pulvérisation de l'extrait aqueux en utilisant une température d'entrée dans la plage allant de 150 à 160°C, et une température de sortie dans la plage allant de 70 à 75°C, de façon à obtenir l'article d'extrait de pandan sous forme pulvérulente,
**caractérisé en ce que** l'article comprend
moins de 10 ppm de proline, sur la base du poids total de l'article,
de 20 à 50 ppm d'acide glutamique, sur la base du poids total de l'article,
de 0,5 à 3 ppm de 2-acétyl-1-pyrroline, sur la base du poids total de l'article, et
de 0,5 à 3 ppm de 3-méthyl-2(5H)-furanone, sur la base du poids total de l'article.

6. Procédé selon la revendication 5, **caractérisé en ce que** l'eau est éliminée de l'extrait aqueux en présence d'un matériau véhicule, où le matériau véhicule comprend un matériau hôte de composé d'inclusion pour y inclure de la 2-acétyl-1-pyrroline et préférablement des précurseurs de 2-acétyl-1-pyrroline,
où le matériau hôte de composé d'inclusion est une cyclodextrine, en particulier l'alpha-cyclodextrine, la bêta-cyclodextrine ou la gamma-cyclodextrine, de préférence la bêta-cyclodextrine.

7. Procédé selon l'une quelconque des revendications 5 à 6, préférablement selon la revendication 5, **caractérisé en ce que** l'eau est éliminée de l'extrait aqueux en présence d'un matériau véhicule, où le matériau véhicule comprend des maltodextrines.

8. Méthode destinée à conférer ou améliorer les propriétés organoleptiques d'un aliment ou d'une boisson choisies dans le groupe constitué par la sensation en bouche et les notes torréfiées,
ou
à masquer un goût altéré d'une matière grasse ou d'une huile comestible,
la méthode comprenant les étapes suivantes :
- la fourniture d'un article d'extrait de pandan selon l'une quelconque des revendications 1 à 4 ou la préparation d'un article d'extrait de pandan selon un procédé selon l'une quelconque des revendications 5 à 7,
- la combinaison de l'article d'extrait de pandan tel que fourni ou tel que préparé avec ledit aliment ou ladite boisson,
ou
avec la matière grasse ou l'huile comestible ayant un goût altéré ou étant susceptible de développer un goût altéré, de façon à ce que ledit goût altéré soit masqué.

9. Méthode selon la revendication 8, la méthode comprenant l'étape supplémentaire de chauffage, cuisson au four ou cuisson de l'aliment ou de la boisson après combinaison avec l'article d'extrait de pandan tel que fourni ou tel que préparé afin d'augmenter la libération de 2-acétyl-1-pyrroline à partir de l'extrait de pandan.

10. Méthode selon l'une quelconque des revendications 8 à 9, dans laquelle le produit est
- du riz ou un produit à base de riz,
ou
- un produit alimentaire comprenant une ou plusieurs matières grasses ou huiles comestibles, préférablement un produit laitier ou de soja.

11. Utilisation d'un article d'extrait de pandan selon l'une quelconque des revendications 1 à 4 ou préparé selon une méthode selon l'une quelconque des revendications 5 à 7, pour
- conférer ou améliorer des propriétés organoleptiques, les propriétés organoleptiques étant choisies dans le groupe constitué par la sensation en bouche et les notes torréfiées,
et/ou
- masquer des goûts altérés de matières grasses ou d'huiles comestibles.
